# EUROPEAN PATENT SPECIFICATION

(11) **EP 3 162 633 B1**
(45) Date of publication and mention of the grant of the patent: **08.12.2021**
(21) Application number: 15465555.9
(22) Date of filing: 28.10.2015
(51) Int. Cl.: B60Q 1/14

(54) **METHOD AND APPARATUS FOR PREVENTING DAZZLING OF A DRIVER OF A MOTOR VEHICLE CAUSED BY LIGHT FROM ANOTHER MOTOR VEHICLE**
VERFAHREN UND VORRICHTUNG ZUR VERHINDERUNG DES BLENDENS EINER FAHRERS EINER KRAFTFAHRZEUGS DURCH LICHT VON EINEM ANDEREN KRAFTFAHRZEUG
PROCÉDÉ ET APPAREIL POUR EMPÊCHER L'ÉBLOUISSEMENT D'UN CONDUCTEUR D'UN VÉHICULE À MOTEUR PROVOQUÉ PAR LA LUMIÈRE PROVENANT D'UN AUTRE VÉHICULE AUTOMOBILE

(43) Date of publication of application: 03.05.2017
(73) Proprietor: Continental Automotive GmbH, 30165 Hannover (DE)
(72) Inventor: Homutescu, Adrian, 700013 Iasi (RO); Apetrei, Cristian, 700064 Iasi (RO)
(74) Representative: Continental Corporation

(56) References cited:
- DE-A1- 19 948 733
- DE-A1-102009 057 391
- DE-A1-102012 001 017
- JP-A- H07 200 987
- JP-A- H11 208 366
- US-A1- 2004 149 895
- US-A1- 2006 152 935
- US-A1- 2014 146 175
- US-A1- 2015 149 045

## Description

### Technical Field

The present invention pertains to a method and an apparatus for preventing dazzling of a driver of a motor vehicle caused by light from a motor vehicle travelling behind.

### Background

In present-day road traffic drivers of motor vehicles are often subject to dazzling caused by headlights of other motor vehicles, either due to a general or load-dependent misalignment of the headlights or due to a situation-dependent inappropriate operation of the headlight in high beam rather than low beam or driving light. While a driver of a motor vehicle may inform a driver of an oncoming motor vehicle that the headlights of his motor vehicle are dazzling, e.g. by flashing the high beam of his own motor vehicle, the situation is different when a motor vehicle approaches from behind. In this situation the light from the headlights of the approaching motor vehicle are reflected by the rear view mirrors straight into the eyes of a driver, and the dazzled driver has no means of informing the driver of the vehicle approaching from behind that the headlights are dazzling.

Manual and automatic mechanisms for reducing the reflectivity of rear view mirrors are known. However, reducing the amount of light reflected by the rear view mirrors generally also reduces the general visibility through the rear view mirrors, which may result in losing the ability to observe what is happening behind the vehicle.

Also, changing the reflectivity of the rear view mirror may take a certain time to become effective. During this time the driver will still be dazzled, because the human visual system requires some time to adjust to changing levels of brightness, notably when going from bright to dark. During this time, which may be in the range of 1-3 seconds or even longer, depending on the difference in brightness and the speed of change, the driver will not be able to fully perceive what is happening in the surrounding of the vehicle. This may lead to potentially dangerous situations and even accidents.

US 2006/0152935 A1 relates to an interactive headlight control system providing a vehicle on which it is installed means for remotely automatically controlling headlights of other surrounding vehicles by sending outgoing remote-action signals. More particularly, the headlight control system provides the vehicle on which it is installed the ability of automatically switching headlights of other surrounding vehicles by remote control from their high position to their low position, even if they have manually been set to high position. The headlight control system also provides means for receiving and reacting to such signals.

US 2004 / 0149895 A1 discloses an electronic transceiver useful in automatically switching a blinding headlight high beam to a low beam setting, comprising a first sensor capable of detecting specifically on oncoming or following headlight's high beam, a transmitter useful in transmitting a signal directed to change a high beam to the low beam setting, a second sensor capable of converting the received signal to the action of changing the headlight mode.

DE 19948733 A1 discloses a vehicle communications system in which a sensor of vehicle detects and dazzling light originating from another vehicle and communicates this information to the other vehicle in order to have this information displayed to the driver of the other vehicle.

### Summary

### Technical Problem

It is an object of the present invention to provide an improved method and an improved apparatus for preventing dazzling of a driver of a motor vehicle caused by headlights from a motor vehicle travelling behind.

### Solution to Problem

The object is achieved by the methods and the apparatus claimed in the independent claims. Advantageous embodiments and developments of the methods and the apparatus are provided in the respective dependent claims.

A method of preventing dazzling of a driver in a second motor vehicle caused by headlights of a first motor vehicle travelling behind the second motor vehicle comprises receiving, in the first motor vehicle, values representing a measured level of light and optionally a crossing of a threshold of the measured level of light impinging on the second motor vehicle. In response to the received values the first motor vehicle adjusts an amount of light emitted by the headlights and/or a zone lit by the headlights.

According to the invention, several values representing the level of light impinging on the second motor vehicle are measured at different locations at the second motor vehicle. For example, values may be measured at external lateral rear view mirrors typically provided at the left and right sides of motor vehicles and at an internal rear view mirror typically provided in a substantially central position at the wind shield. However, it is also conceivable to place sensors at positions lower than the positions of the rear view mirrors in order to be able to detect dazzling light levels even before they arrive at the rear view mirror, assuming that, in case of a vehicle coming on from behind, the light beams are more likely to reach higher the closer the oncoming vehicle is.

Adjusting the amount of light emitted by the headlights of the first motor vehicle may include reducing the light output of one or more headlights or headlight arrangements. For example, in case the first vehicle has two headlights, one of the headlights may be dimmed, while the other headlight may be operated as before. The light intensity or brightness in an area that was previously lit by both headlights will now be lower than before. Alternatively, or in addition, the horizontal or vertical beam direction of one or both headlights may be adjusted. This may be implemented by headlights that are arranged pivotable in a horizontal and/or vertical direction. By turning one or both headlights away from the vehicle in front dazzling of the driver can be avoided. If the headlights are turned sideways in opposite directions an unlit "tunnel" will be created, in which the vehicle in front is driving. If the headlights are turned down towards the road surface, dazzling of the driver in the vehicle in front will also be effectively avoided. Likewise, if the shape of the light beam is adjustable, e.g. by partially blocking the light beam from the headlight or headlight assembly, such unlit zone may be created.

In case the headlights are headlight arrangements of multiple individual light sources, each having an individual beam pattern and direction, adjusting the beam direction may be effected by controlling individual ones of the multiple light sources to be on or off such that only those light sources remain on whose individual beam patterns and directions are not pointing towards those areas or zones of the vehicle in front that are to be avoided.

According to the methods of the invention, the values representing a measured level of light impinging on the second motor vehicle from behind provide information about a distribution of the measured level of light across a width of the second vehicle. This information may be used for further refining the control of the headlights of the first vehicle. If, for example, a sensor placed in a right lateral rear view mirror of the second motor vehicle receives a light level below a dazzling threshold, and a corresponding sensor placed in a left lateral rear view mirror receives a light level exceeding a dazzling threshold, the information sent to the first motor vehicle may indicate which headlight to dim or to turn away.

In another embodiment of the method adjusting the emitted amount of light and/or changing the zone lit by the headlights is performed depending on a steering angle of a steering wheel of the first motor vehicle and/or a relative lateral offset of the first motor vehicle in respect of the second motor vehicle.

The foregoing embodiment may be advantageous in case of the first vehicle overtaking the second vehicle. In this case the information received by the first vehicle will indicate that sensors placed in the left lateral and the central rear view mirrors of the second vehicle receive excessive light, while the right lateral rear view mirror does not. If no information about a relative lateral offset or a steering angle were available, this would result in the right headlamp remaining at its current level of light emission and direction, and the left headlamp being controlled to reduce its light emission and/or to turn away to the left. However, this would not reduce the dazzling, as it is the right headlamp that causes the dazzling. The information about a steering angle or the relative lateral offset of the first motor vehicle in respect of the second motor vehicle helps making a correct decision which headlight to dim or to turn away.

A light control apparatus in a motor vehicle that performs one or more embodiments of the inventive method comprises a receiver adapted to receive, from a second motor vehicle travelling in front of the first motor vehicle, values representing a measured level of light and optionally an indication that the measured level of light impinging on the second motor vehicle from behind has exceeded a dazzling level. The apparatus further comprises a control unit that is adapted to adjust, in response to the received values or indication, an amount of light emitted by the headlights and/or a zone lit by the headlights.

In an embodiment of the inventive light control apparatus the control unit is communicatively connected to an actuator that is arranged to adjust a horizontal or vertical beam direction of one or more headlights or headlight arrangements, or a shape of the light beam. Alternatively or in addition the control unit controls dimming or switching off individual ones of a plurality of light sources in one or more of the headlight arrangements.

The communication between the second and the first motor vehicle can be implemented in various ways. In one embodiment the communication is performed within the framework of what is referred to as car-to-car or vehicle-to-vehicle communication, often also named car2car, C2C, C2X, vehicle2vehicle, V2V or V2X. V2V is also known as Vehicular Ad Hoc Network, or VANET. This communication is typically bi-directional using radio transmitters and receivers operating in accordance with IEEE 802.11p and other standards. The information about the light levels received by the various sensors is transmitted using a suitable protocol within the C2C framework.

In another embodiment a directed wireless communication connection is established, e.g. by using a directional antenna facing backwards. The information from the various sensors may be communicated using a protocol similar to the one mentioned above, or it may be a standardized one-way-protocol that is adapted to only communicate light sensor values or binary information whether or not a dazzling light threshold is exceeded. A simple exemplary implementation uses discrete frequencies for left, middle and right and on-off-modulation for indicating an exceeded threshold. It is possible to replace the on-off-modulation with amplitude modulation.

Although the present specification has focused on light impinging on the second motor vehicle from behind, it is also conceivable , in an example not being part of the invention, to detect light levels impinging on the second motor vehicle from headlights of vehicles coming on from the front. In this case the second motor vehicle needs to be equipped with corresponding sensors directed to the front of the vehicle, and communication with oncoming first vehicles must accordingly be possible.

In a development of the method the second vehicle predicts, form the light sensor measurements, if a vehicle travelling behind is about to overtake. For example, if a maximum of the light intensity moves to the left (assuming driving on the right side of the street) for a prolonged period of time, and if the light intensity increases during this period of time, it can be assumed that the car travelling behind is about to overtake. In this case the second vehicle may automatically be steered closer towards the right side of the driving lane, if possible, and may also be decelerated slightly, in order to create additional safety space for the vehicles and expedite the process of overtaking.

Light sensors that can be used in various embodiments of the present method include one or more of photo sensors, e.g. photosensitive resistors, transistors or diodes, and cameras, including CMOS and CCD cameras. The light sensors may be connected to and controlled by a separate control unit or may include microprocessors and storage for storing program instructions allowing the sensors to perform steps of the present method under control of the control unit. The control unit, either separate or integrated, is connected to a transmitter that is adapted to transmit the measured levels of light and/or an indication that a dazzling light level is exceeded to another motor vehicle.

### Brief Description of Drawings

In the following section the invention will be presented with reference to the drawing, in which
Fig. 1 shows an exemplary diagram of a message exchange between a second motor vehicle and a first motor vehicle;
Fig. 2 shows an exemplary schematic block diagram of an apparatus adapted to perform steps of the inventive method in a first motor vehicle;
Fig. 3 shows a schematic block diagram of an apparatus for performing steps of one or more embodiments of the inventive method in a second motor vehicle;
Fig. 4 shows a schematic top view of a motor vehicle and exemplary positions of light sensors for use in accordance with the present method; and
Figs. 5a - e show various stages of light control in accordance with the inventive method in an exemplary use case.

In the figures similar or identical elements are referenced by the same reference designators.

### Description of Embodiments

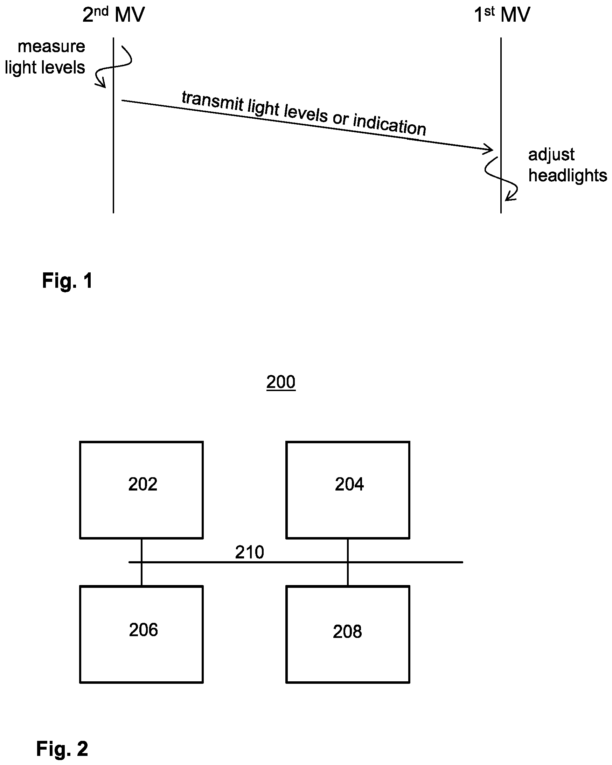

Figure 1 shows an exemplary diagram of the message exchange between a second motor vehicle and a first motor vehicle, as well as a simplified representation of processes internal to the vehicles. A second motor vehicle, 2^{nd} MV, measures levels of light impinging on one or more sensors (not shown). When a light level exceeds a dazzling threshold the second motor vehicle transmits light levels or an indication that a dazzling light level is exceeded to a first motor vehicle, 1^{st} MV. In response to the received light levels or the indication the first motor vehicle adjusts the headlights accordingly. The adjustment of the headlights may be effected in discrete steps or continuously. Likewise, the transmission of the light levels or the indication, and obviously receiving the transmitted light levels or indication, may be performed periodically at fixed or adjustable intervals, as long as the light levels exceed a dazzling level.

Figure 2 shows an exemplary schematic block diagram of an apparatus 200 adapted to perform steps of the inventive method in a first motor vehicle. A receiver 202, a control unit 204, and headlights 206 and 208 are communicatively connected by one or more bus systems 210. The control unit 204 comprises a microcontroller, random access memory and non-volatile memory (not shown). The non-volatile memory of control unit 204 stores computer program instructions which, when executed by the microprocessor in cooperation with the random access memory, cause the apparatus 200 to perform steps of the inventive method. It is to be noted, that receiver 202 as well as headlights 206 and 208 may also individually be equipped with microcontrollers, random access memory and non-volatile memory, and that parts of the inventive method may be performed in those elements under control of the control unit 204.

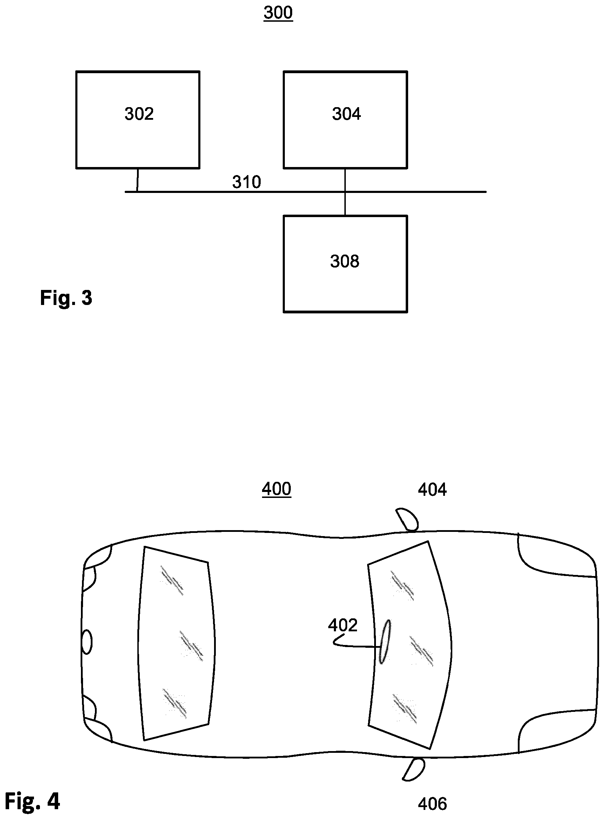

Figure 3 shows a schematic block diagram of an apparatus 300 for performing steps of one or more embodiments of the inventive method in a second motor vehicle. One or more sensors 302, a control unit 304 and a transmitter 308 are communicatively connected by one or more bus systems 310. The control unit 304 comprises a microcontroller, random access memory and non-volatile memory (not shown). The non-volatile memory of control unit 304 stores computer program instructions which, when executed by the microprocessor in cooperation with the random access memory, cause the apparatus 300 to perform steps of the inventive method. It is to be noted that the one or more sensors 302 as well as the transmitter 308 may also individually be equipped with microcontrollers, random access memory and non-volatile memory, and that parts of the inventive method may be performed in those elements under control of the control unit 304.

Figure 4 shows a schematic top view of a motor vehicle 400 and exemplary positions of light sensors for use in accordance with the present method. Since the dazzling occurs when light is reflected by rear view mirrors into the eyes of the driver of the car placing the light sensors in the rear view mirrors of the car is an obvious choice. In the motor vehicle 400 shown in figure 4 sensors are placed in the central rear view mirror 402, in the left lateral rear view mirror 404 and in the right lateral rear view mirror 406. In order to detect excessive light levels coming from the front of the motor vehicle, corresponding forward-facing sensors may also be placed in the housings of the rear view mirrors.

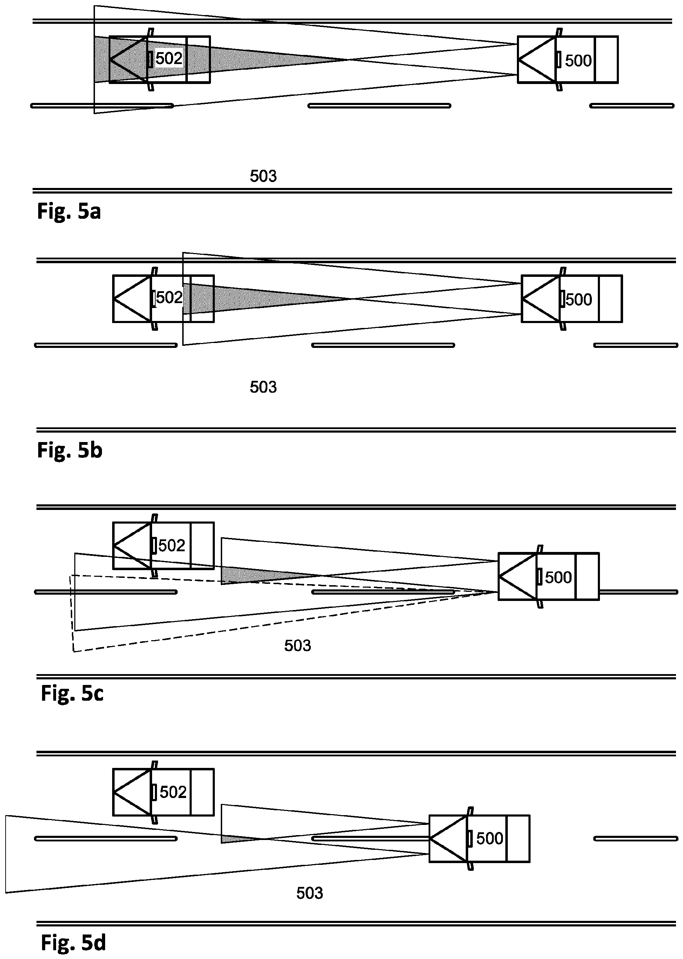

Figures 5a - 5e show various stages of light control in accordance with the inventive method in an exemplary use case. In figure 5a a first motor vehicle 500 travels behind a second motor vehicle, 502, on the same driving lane of a road 503. The areas illuminated by the headlights of the first motor vehicle 500 are indicated by the triangular shapes For the sake of clarity the shapes of the zones lit by the headlights are shown simplified. The headlights of the first motor vehicle 500 illuminate the second motor vehicle 502 in such a way that a zone illuminated by both the left and the right headlight of the first motor vehicle 500 includes the centre rear view mirror of the second motor vehicle 502. The overlapping illumination area of the left and the right headlights is indicated by the grey triangle. While the disturbance of a driver of the second vehicle 502 caused by the increased light intensity reflected by the centre mirror may be larger than that caused by the light reflected from the lateral mirrors it is still desirable to completely avoid any such disturbance.

Figure 5b shows a first stage of light control in accordance with the present invention. The second motor vehicle 501 has detected the light levels impinging on respective sensors (not shown) and has determined that the light level exceeds the dazzling threshold. Accordingly, second motor vehicle 502 has transmitted a message to first motor vehicle 500, which, in response to the message, has adjusted the headlights so as not to shine light on the rear view mirrors of the second motor vehicle 502. In the exemplary embodiment of the figure the headlights are rotated downwards, i.e. towards the road surface, about a horizontal axis, thereby effectively shortening the reach of the light beams. However, other ways of light control are conceivable, including dimming the light, or changing the shape of the area lit by the headlights in order to exclude the area of the second motor vehicle 502 .

Figure 5c shows a second stage of light control in accordance with the present invention. The first motor vehicle 500 is about to overtake the second motor vehicle 502 and has begun changing the driving lane. Thus, it is laterally displaced with respect to the second motor vehicle 502. The light sensor placed in the right lateral rear view mirror of the second motor vehicle 502 does not receive any light. However, the central rear view mirror of the second motor vehicle 502 would still receive light from the right headlight of the first motor vehicle 500 and transmit according values to the first motor vehicle 500. In addition, sensors in the first motor vehicle 500 have detected a change in the steering angle and/or have determined the change in the relative position with respect to the second motor vehicle 502 and control the right headlight so as not to project light onto the rear view mirrors of the second motor vehicle 502. Due to the lateral displacement of the first motor vehicle 500 with respect to the second motor vehicle 502 the left headlight of the second motor vehicle 502 does not shine any light onto the central rear view mirror of the second motor vehicle 502. However, it may still shine light onto the left lateral rear view mirror of the second motor vehicle 502, thereby dazzling the driver. In order to avoid any dazzling of the driver of the second motor vehicle 502 while still lighting the road ahead as much as possible the left headlight of the first motor vehicle 500 is rotated horizontally to the left, as indicated by the triangular shape drawn in a dashed line. The amount of rotation to the left is at least partly determined by sensor values from the second motor vehicle 502 transmitted to the first motor vehicle 500.

Figure 5d shows a third stage of light control in accordance with the present invention. The first motor vehicle 500 is now almost fully placed in a neighbouring driving lane running parallel to the initial driving lane. As such, the left headlight is rotated horizontally and vertically back into its normal position and is now pointing straight ahead. However, since the right headlight may still cause dazzling of the driver of the second motor vehicle 502 it is still rotated vertically downwards, i.e. towards the surface of the road. The rotation of the right headlight is at least partly determined by sensor values from the second motor vehicle 502 transmitted to the first motor vehicle 500.

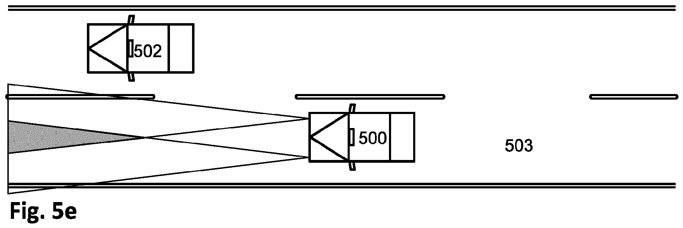

Figure 5e shows a fourth stage of my control in accordance with the present invention. The first motor vehicle 500 is now fully placed in the neighbouring driving lane running parallel to the initial driving lane. Both headlights of the first motor vehicle 502 are brought back into their normal positions since none of the sensors in the second motor vehicle 502 receive any light and transmit any values to the first motor vehicle 500.

Throughout this specification the expressions "headlight" and "headlight assembly" are used interchangeably unless indicated or obvious from the respective context.

## Claims

1. Method of preventing dazzling of a driver in a second motor vehicle (502) caused by headlights of a first motor vehicle (500) travelling behind the second motor vehicle, comprising:
- the first motor vehicle (500) receiving, from the second motor vehicle, values representing a measured level of light and optionally a crossing of a threshold of the measured level of light impinging on the second motor vehicle (502) from behind,
- the first motor vehicle (500), in response to the received values, adjusting an amount of light emitted by the headlights and/or a zone lit by the headlights (206, 208),
**characterized in that** the values representing a measured level of light impinging on the second motor vehicle from behind provide information about a distribution of the measured level of light across a width of the second vehicle (502).

2. The method of claim 1, wherein adjusting the amount of light emitted by the headlights (206, 208) and/or a zone lit by the headlights includes reducing the light output of one or more headlights or headlight arrangements and/or adjusting a horizontal or vertical beam direction of one or more headlight arrangements.

3. The method of claim 2, wherein reducing the light output of one or more headlight arrangements includes dimming or switching off individual ones of a plurality of light sources in a headlight arrangement.

4. The method of claim 1, wherein the information about the distribution of the measured level of light across the width of the second motor vehicle (502) is used for determining in which headlight (206, 208) of the second motor vehicle (502) to adjust the emitted amount of light and/or how to change the zone lit by the headlights.

5. The method of claim 1, wherein adjusting the emitted amount of light and/or changing the zone lit by the headlights (206, 208) is performed depending on a steering angle of a steering wheel of the first motor vehicle and/or a relative lateral offset of the first motor vehicle (500) in respect of the second motor vehicle (502).

6. Light control apparatus in a first motor vehicle (500) comprising:
- a receiver (202) adapted to receive, from a second motor vehicle, values representing a measured level of light and optionally an exceeding of a threshold of the measured level of light impinging on the second motor vehicle (502) from behind,
- a control unit adapted to adjust, in response to the received values, an amount of light emitted by the headlights (206, 208) and/ or an area lit by the headlights (206, 208),
**characterized in that** the values representing a measured level of light impinging on the second motor vehicle from behind provide information about a distribution of the measured level of light across a width of the second vehicle (502).

7. The light control apparatus of claim 6, wherein the control unit (204, 304) is communicatively connected to an actuator that is arranged to adjust a horizontal or vertical beam direction of one or more headlights (206, 208) or headlight arrangements, or a shape of respective emitted light beams, and/or wherein the control unit controls dimming or switching off individual ones of a plurality of light sources in one or more of the headlight arrangements.

8. Method of providing information about dazzling caused by light in a second motor vehicle (502) travelling ahead of a first motor vehicle (500), comprising
- operating one or more light sensors (302) arranged at one or more positions across the second motor vehicle,
- operating a control unit (204, 304) that is arranged to determine levels of light impinging on the second motor vehicle (502) from behind based on measurements of the one or more light sensors, and to determine if the level of impinging light is crossing a dazzling threshold, and
- providing information about the light levels and optionally about dazzling caused by the light, to the first motor vehicle (500) via a transmitter (308),
**characterized in that** the information contains values providing information about a distribution of the measured level of light across a width of the second vehicle (502).

## Patentansprüche

1. Verfahren zur Verhinderung des Blendens eines Fahrers in einem zweiten Kraftfahrzeug (502), verursacht durch Scheinwerfer eines ersten Kraftfahrzeugs (500), das hinter dem zweiten Kraftfahrzeug fährt, das Folgendes aufweist:
- das erste Kraftfahrzeug (500) empfängt, vom zweiten Kraftfahrzeug, Werte, die ein gemessenes Niveau von Licht und optional ein Überschreiten eines Schwellenwerts des gemessenen Niveaus von Licht, das von hinten auf das zweite Kraftfahrzeug (502) auftrifft, darstellen,
- das erste Kraftfahrzeug (500) stellt, in Reaktion auf die empfangenen Werte, eine Menge von Licht ein, die durch die Scheinwerfer und/oder eine durch die Scheinwerfer (206, 208) beleuchtete Zone emittiert wird, **dadurch gekennzeichnet, dass** die Werte, die ein gemessenes Niveau von Licht, das von hinten auf das zweite Kraftfahrzeug auftrifft, Informationen über eine Verteilung des gemessenen Niveaus von Licht über eine Breite des zweiten Fahrzeugs (502) bereitstellen.

2. Verfahren nach Anspruch 1, wobei Einstellen der Menge von Licht, die durch die Scheinwerfer (206, 208) und/oder eine durch die Scheinwerfer beleuchtete Zone emittiert wird, Verringern des Lichtausgangs von einem oder mehreren Scheinwerfern oder Scheinwerferanordnungen und/oder Einstellen einer horizontalen oder vertikalen Strahlrichtung von einer oder mehreren Scheinwerferanordnungen umfasst.

3. Verfahren nach Anspruch 2, wobei Verringern des Lichtausgangs von einer oder mehreren Scheinwerferanordnungen Abblenden oder Ausschalten einzelner von mehreren Lichtquellen in der Scheinwerferanordnung umfasst.

4. Verfahren nach Anspruch 1, wobei die Informationen über die Verteilung des gemessenen Niveaus von Licht über die Breite des zweiten Kraftfahrzeugs (502) verwendet werden zum Bestimmen, in welchem Scheinwerfer (206, 208) des zweiten Kraftfahrzeugs (502) die emittierte Menge von Licht einzustellen ist und/oder wie die durch die Scheinwerfer beleuchtete Zone zu ändern ist.

5. Verfahren nach Anspruch 1, wobei Einstellen der emittierten Menge von Licht und/oder Ändern der durch die Scheinwerfer (206, 208) beleuchteten Zone in Abhängigkeit von einem Lenkwinkel eines Lenkrads des ersten Kraftfahrzeugs und/oder einem relativen lateralen Versatz des ersten Kraftfahrzeugs (500) bezüglich des zweiten Kraftfahrzeugs (502) durchgeführt wird.

6. Lichtsteuerungseinrichtung in einem ersten Kraftfahrzeug (500), die Folgendes aufweist:
- einen Empfänger (202), angepasst zum Empfangen, von einem zweiten Kraftfahrzeug, von Werten, die ein gemessenes Niveau von Licht und optional ein Überschreiten eines Schwellenwerts des gemessenen Niveaus von Licht, das von hinten auf das zweite Kraftfahrzeug (502) auftrifft, darstellen,
- eine Steuereinheit, angepasst zum Einstellen, in Reaktion auf die empfangenen Werte, einer Menge von Licht, die durch die Scheinwerfer (206, 208) und/oder einen durch die Scheinwerfer (206, 208) beleuchteten Bereich emittiert wird,
**dadurch gekennzeichnet, dass** die Werte, die ein gemessenes Niveau von Licht, das von hinten auf das zweite Kraftfahrzeug auftrifft, Informationen über eine Verteilung des gemessenen Niveaus von Licht über eine Breite des zweiten Fahrzeugs (502) bereitstellen.

7. Lichtsteuereinrichtung nach Anspruch 6, wobei die Steuereinheit (204, 304) kommunikativ mit einem Aktuator verbunden ist, der angeordnet ist, um eine horizontale oder vertikale Strahlrichtung von einem oder mehreren Scheinwerfern (206, 208) oder Scheinwerferanordnungen oder eine Form von entsprechenden emittierten Lichtstrahlen einzustellen, und/oder wobei die Steuereinheit Abblenden oder Ausschalten einzelner von mehreren Lichtquellen in einer oder mehreren der Scheinwerferanordnungen steuert.

8. Verfahren zum Bereitstellen von Informationen über Blenden, verursacht durch Licht, in einem zweiten Kraftfahrzeug (502), das vor einem ersten Kraftfahrzeug (500) fährt, das Folgendes aufweist
- Betreiben von einem oder mehreren Lichtsensoren (302), angeordnet an einer oder mehreren Positionen quer über dem zweiten Kraftfahrzeug,
- Betreiben einer Steuereinheit (204, 304), die dazu angepasst ist, Niveaus von Licht, das von hinten auf das zweite Kraftfahrzeug (502) auftritt, basierend auf Messungen des einen oder der mehreren Lichtsensoren zu bestimmen und zu bestimmen, ob das Niveau von auftreffendem Licht einen Blendschwellenwert überschreitet, und
- Bereitstellen von Informationen über die Lichtniveaus und optional über Blenden, verursacht durch das Licht, für das erste Kraftfahrzeug (500) über einen Sender (308), **dadurch gekennzeichnet, dass** die Informationen Werte enthalten, die Informationen über eine Verteilung der gemessenen Niveaus von Licht über eine Breite des zweiten Fahrzeugs (502) bereitstellen.

## Revendications

1. Procédé de prévention d'éblouissement d'un conducteur, dans un second véhicule à moteur (502), causé par des phares d'un premier véhicule à moteur (500) se déplaçant derrière le second véhicule à moteur, comprenant :
- par le premier véhicule à moteur (500), la réception, à partir du second véhicule à moteur, de valeurs représentant un niveau mesuré d'une lumière et optionnellement un dépassement d'un seuil du niveau mesuré d'une lumière incidente sur le second véhicule à moteur (502) à partir de derrière,
- par le premier véhicule à moteur (500), en réponse aux valeurs reçues, l'ajustement d'une quantité de lumière émise par les phares et/ou d'une zone éclairée par les phares (206, 208),
**caractérisé en ce que** les valeurs représentant un niveau mesuré d'une lumière incidente sur le second véhicule à moteur à partir de derrière fournissent des informations concernant une distribution du niveau mesuré de la lumière sur une largeur du second véhicule (502).

2. Procédé selon la revendication 1, dans lequel l'ajustement de la quantité de lumière émise par les phares (206, 208) et/ou d'une zone éclairée par les phares inclut la réduction du rendement lumineux d'un ou de plusieurs phares ou agencements de phare et/ou l'ajustement d'une direction de faisceau horizontale ou verticale d'un ou de plusieurs agencements de phare.

3. Procédé selon la revendication 2, dans lequel la réduction du rendement lumineux d'un ou de plusieurs agencements de phare inclut l'affaiblissement d'intensité lumineuse ou l'arrêt de sources individuelles d'une pluralité de sources de lumière dans un agencement de phare.

4. Procédé selon la revendication 1, dans lequel les informations concernant la distribution du niveau mesuré de la lumière sur la largeur du second véhicule à moteur (502) sont utilisées pour déterminer le phare (206, 208) du second véhicule à moteur (502) dans lequel il faut ajuster la quantité de lumière émise et/ou la manière dont changer la zone éclairée par les phares.

5. Procédé selon la revendication 1, dans lequel l'ajustement de la quantité de lumière émise et/ou le changement de la zone éclairée par les phares (206, 208) est réalisé en fonction d'un angle de braquage d'un volant de direction du premier véhicule à moteur et/ou d'un décalage latéral relatif du premier véhicule à moteur (500) par rapport au second véhicule à moteur (502).

6. Appareil de commande de lumière dans un premier véhicule à moteur (500) comprenant :
- un récepteur (202) adapté pour recevoir, à partir d'un second véhicule à moteur, des valeurs représentant un niveau mesuré d'une lumière et optionnellement un dépassement d'un seuil du niveau mesuré d'une lumière incidente sur le second véhicule à moteur (502) à partir de derrière,
- une unité de commande adaptée pour ajuster, en réponse aux valeurs reçues, une quantité de lumière émise par les phares (206, 208) et/ou une zone éclairée par les phares (206, 208),
**caractérisé en ce que** les valeurs représentant un niveau mesuré d'une lumière incidente sur le second véhicule à moteur à partir de derrière fournissent des informations concernant une distribution du niveau mesuré de la lumière sur une largeur du second véhicule (502).

7. Appareil de commande de lumière selon la revendication 6, dans lequel l'unité de commande (204, 304) est connectée en communication à un actionneur qui est agencé pour ajuster une direction de faisceau horizontale ou verticale d'un ou de plusieurs phares (206, 208) ou agencements de phare, ou une forme de faisceaux de lumière émise respectifs, et/ou dans lequel l'unité de commande commande l'affaiblissement d'intensité lumineuse ou l'arrêt de sources individuelles d'une pluralité de sources de lumière dans un ou plusieurs des agencements de phare.

8. Procédé de fourniture d'informations concernant un éblouissement, causé par de la lumière dans un second véhicule à moteur (502) se déplaçant devant un premier véhicule à moteur (500), comprenant
- la mise en fonctionnement d'un ou de plusieurs capteurs de lumière (302) agencés à une ou plusieurs positions sur le second véhicule à moteur,
- la mise en fonctionnement d'une unité de commande (204, 304) qui est agencée pour déterminer des niveaux d'une lumière incidente sur le second véhicule à moteur (502) à partir de derrière sur la base de mesures des un ou plusieurs capteurs de lumière, et pour déterminer si le niveau de la lumière incidente dépasse un seuil d'éblouissement, et
- la fourniture d'informations, concernant les niveaux de la lumière et optionnellement concernant l'éblouissement causé par la lumière, au premier véhicule à moteur (500) par l'intermédiaire d'un transmetteur (308),
**caractérisé en ce que** les informations contiennent des valeurs fournissant des informations concernant une distribution du niveau mesuré de la lumière sur une largeur du second véhicule (502).
